(19) Europäisches Patentamt
European Patent Office
Office européen des brevets

(11) EP 2 484 068 B1

(12) **EUROPEAN PATENT SPECIFICATION**

(45) Date of publication and mention
of the grant of the patent:
**26.10.2016 Bulletin 2016/43**

(51) Int Cl.:
*H04L 25/02* (2006.01)   *G06F 15/80* (2006.01)
*G06F 17/16* (2006.01)

(21) Application number: **10706170.7**

(22) Date of filing: **29.01.2010**

(86) International application number:
**PCT/EP2010/051094**

(87) International publication number:
**WO 2011/038940 (07.04.2011 Gazette 2011/14)**

(54) **MATRIX INVERSION USING QR DECOMPOSITION ON A PARALLEL PIPELINED SYSTOLIC ARRAY**

MATRIXUMKEHR MITTELS QR-ZERLEGUNG AUF EINEM PARALLELEN SYSTOLISCHEN PIPELINE-ARRAY

INVERSION DE MATRICE À L'AIDE DE DÉCOMPOSITION QR SUR RÉSEAU SYSTOLIQUE EN PIPELINE PARALLÈLE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **01.10.2009 GR 20090100534**

(43) Date of publication of application:
**08.08.2012 Bulletin 2012/32**

(73) Proprietor: **Intracom S.A. Telecom Solutions
19002 Paiania, Athens (GR)**

(72) Inventors:
• **DIMITRIOU, Athanasios**
**GR-19002 Paiania Athens (GR)**
• **PANAYIOTOPOULOS, Ilias**
**GR-19002 Paiania Athens (GR)**
• **PERISSAKIS, Stylianos**
**GR-19002 Paiania Athens (GR)**

(74) Representative: **Samuelides, Emmanuel
Leof. Alexandras 43
114 73 Athens (GR)**

(56) References cited:
EP-A2- 1 772 809      WO-A1-2007/037716
US-A1- 2009 116 588   US-B1- 6 675 187

• EDMAN F ET AL: "A Scalable Pipelined Complex Valued Matrix Inversion Architecture" CONFERENCE PROCEEDINGS / IEEE INTERNATIONAL SYMPOSIUM ON CIRCUITS AND SYSTEMS (ISCAS) : MAY 23 - 26, 2005, INTERNATIONAL CONFERENCE CENTER, KOBE, JAPAN, IEEE SERVICE CENTER, PISCATAWAY, NJ LNKD-DOI:10.1109/ISCAS.2005.1465629, 23 May 2005 (2005-05-23), pages 4489-4492, XP010817161 ISBN: 978-0-7803-8834-5

**Description**

The present invention refers to the field of wireless communications and more specifically to the design of a **P**arallel **P**ipelined **S**ystolic **A**rray (PPSA) architecture that implements a **M**ultiple **I**nput **M**ultiple **O**utput (MIMO) zero-forcing detector. In particular the invention refers to systolic array architecture that implements QR decomposition (QRD), i.e. a method for performing matrix inversion and an apparatus to implement such a method on one or a plurality of consecutive matrices. The invention also refers to a receiving apparatus for Multiple Input Multiple Output transmission.

A MIMO system increases the capacity of a system by allowing multiple independent data streams to be transmitted from multiple antenna elements in parallel and to be successfully decoded at the receiver. The spectral efficiency, complexity and performance of such systems depend on the number of antenna elements used. Thus the challenging task arises to develop the most efficient algorithms for systems with large number of antenna elements. In turn, efficient parallel architectures are sought after for the realization of parallel signal processing algorithms of high complexity. The technique may be applied to an **O**rthogonal **F**requency **D**ivision **M**ultiple **A**ccess (OFDMA) system where a channel matrix corresponds to each subcarrier within the received OFDMA symbol. Hence, the requirement for a massively parallel and extremely efficient in terms of execution speed architecture is apparent. WO 2007/037716 discloses a single triangular systolic array structure that is suitable for VLSI implementation. It presents a method for QR decomposition which applies Givens Rotations to a triangular systolic array using the CORDIC algorithm. Each column of the matrix to be decomposed forms a pipeline, which is shifted into the triangular structure to produce **R.** Subsequently, in the same pipeline each column of the identity matrix is shifted into the triangular structure to produce the unitary $\mathbf{Q}^H$ (*H* denotes conjugate transpose) matrix. Other documents that also present triangular array architectures are EP - 1 772 809, US 2009/116588, US 6 675 187A2 and the paper of Edman, F. et al. A Scalable Pipelined Complex Valued Matrix Inversion Architecture.

The object of the invention is to propose a method and an apparatus, which is more efficient in terms of execution speed than the conventional triangular systolic array structure for QR decomposition such that it can decompose fast and efficiently one or a plurality of consecutive matrices and is suitable for implementation on a multi-processor array.

The apparatus according to the invention is defined in claim 1 and a method according to the invention is defined in claim 9:

The apparatus according to the invention performs a QR decomposition of one or a plurality of consecutive matrices **H,** each of them with at least four columns with a plurality of elements, to a corresponding number of consecutive upper triangular matrices **R** and consecutive unitary matrices $\mathbf{Q}^H$. The apparatus comprises a first set of at least four pipeline branches for the calculation of matrices **R** and a second set of at least four pipeline branches for the calculation of matrices $\mathbf{Q}^H$, with each one of the at least four pipeline branches for the calculation of matrices **R** having a plurality of processor array element blocks, with each one of the said processor array element blocks including input means configured to receive the elements of the matrix **H,** so that each one of the at least four pipeline branches implements a systolic array structure to process in parallel the at least four columns of each matrix **H,** and with each one of the said systolic array structures being different from the others of the said systolic array structures.

The invention suggests a method for QR decomposition of a matrix **H** with at least four columns to an upper triangular **R** matrix and a unitary $\mathbf{Q}^H$ matrix. The method uses a first set of at least four systolic pipeline branches for the calculation of matrices **R** and a second set of at least four systolic pipeline branches for the calculation of matrices $\mathbf{Q}^H$, with each one of the at least four systolic pipeline branches of the first set being dedicated to process in parallel a column of the matrix **H,** so that each one of the at least four columns of the **H** matrix is processed by one of the at least four systolic array pipeline branches, in that the at least four columns of the **H** matrix are processed in parallel by the at least four systolic array pipeline branches of the first set, and in that each one of the at least four systolic array pipeline branches of the first set has a different structure from the others of the at least four systolic array pipeline branches of the first set.

The proposed architecture decomposes the QR decomposition problem into several parallel pipeline branches, where each pipeline branch is dedicated to processing a specific column of the channel matrix per subcarrier. At each successive channel matrix input, each of its columns are supplied to the corresponding pipeline branches and each branch implements a specific systolic array structure thus forming a pipeline which expects the corresponding column of the next channel matrix. In comparison to WO 2007/037716 the PPSA technique differs in that a dedicated systolic array structure processes in parallel each column of the channel matrix in a pipelined fashion and a dedicated PPSA structure computes the $\mathbf{Q}^H$ unitary, resulting in a design which is not only at least eight times faster but can accept as input a number of consecutive channel matrices through pipelines dedicated to each matrix column. Due to redundancy, not all structures are triangular thus utilizing efficiently the number of processing elements required. The rotational matrices computed in each previous systolic array structure are supplied as known data to the next systolic array structure thus avoiding re-computation. The PPSA architecture achieves a significant throughput advantage due to the parallel partitioning of the inversion matrix. Using this technique it is possible to achieve optimized performance and significant increase in throughput.

The dependent claims define particular embodiments offering further advantages:

Preferably the systolic array structures are as many as the columns of the matrix **H.** When decomposing a 4x4 matrix the apparatus comprises a first set of four pipeline branches for the calculation of matrix **R.** Preferably the apparatus includes a further set of four pipeline branches being configured to receive as input the Givens rotations that have been calculated in the first set of four pipeline branches and to provide as output the corresponding plurality of consecutive unitary matrices **Q**$^H$.

Preferably at least one of the at least four pipeline branches has a linear structure.

The apparatus for QR decomposition is configured to calculate Givens rotation matrices. The Givens rotation matrix is a 2×2 matrix, which when it is multiplied with another 2×2 matrix results in a matrix with zero value in its element occupying the second row of its first column.

The pipeline branches include a plurality of processor array element blocks configured either to calculate the Givens rotations or to receive the Givens rotations that have been calculated in another of the at least four pipeline branches. At least one processor array element block includes a vectoring processor array element and a rotational processor array element, the vectoring processor array element being configured to take as input a complex number and to provide as output the phase and magnitude of this number and the rotational processor array element being configured to take as input an angle and to provide as output the sine and cosine of this angle. The rotational processor array element and the vectoring processor array element are linked so that the rotational processor array element receives as input the output of the vectoring processor array element.

An apparatus for QR decomposition according to the invention may be included in a receiving apparatus for Multiple Input Multiple Output transmission and a method for QR decomposition according to the invention may be incorporated in a method for QR decomposition of the channel matrix of a Multiple Input Multiple Output antenna system.

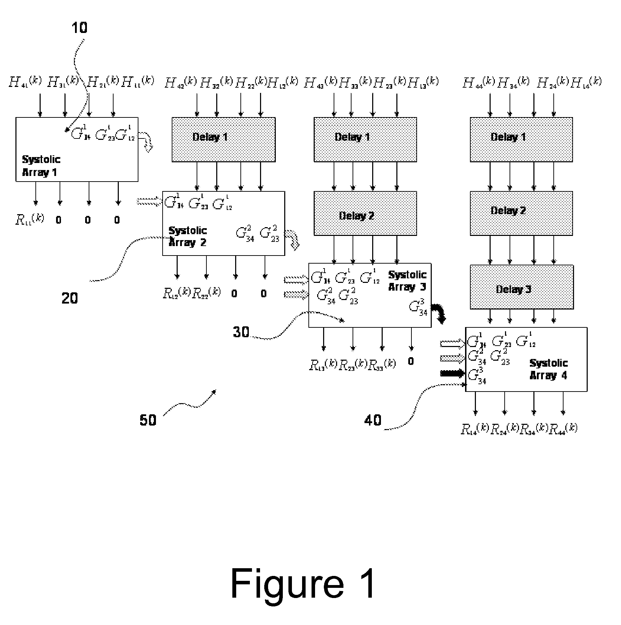

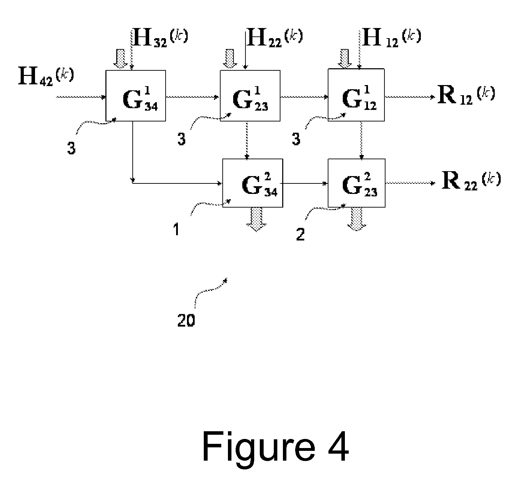

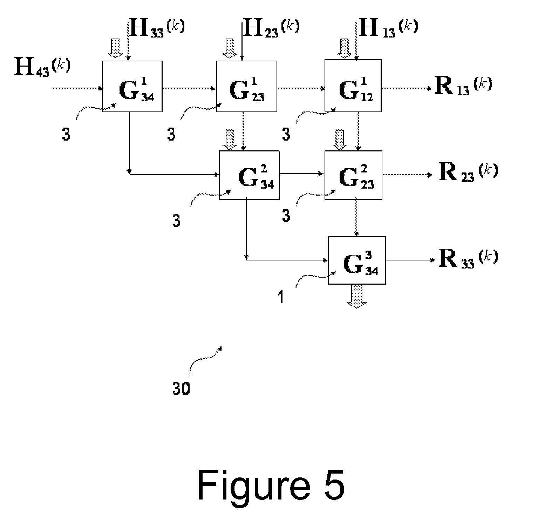

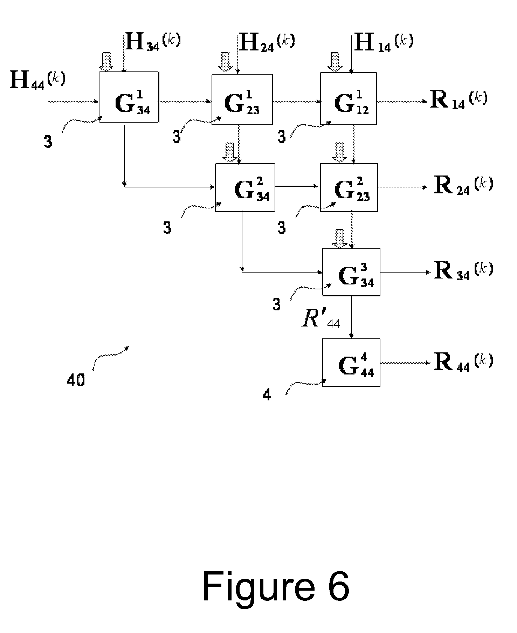

Preferred embodiments of the invention will be described with reference to **figures 1 to 11.** In particular

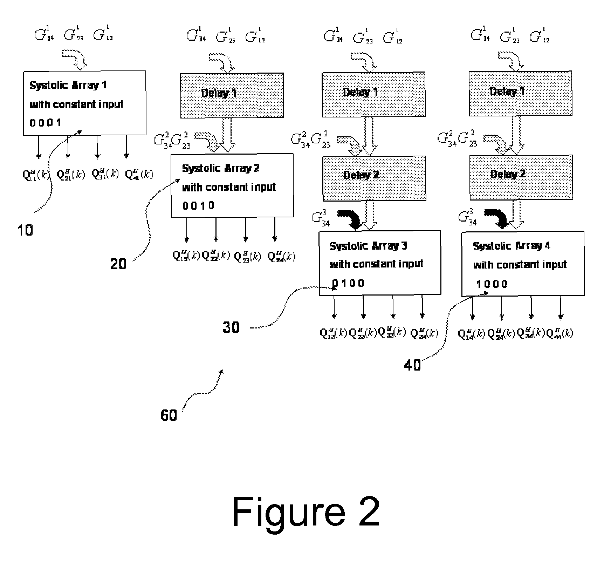

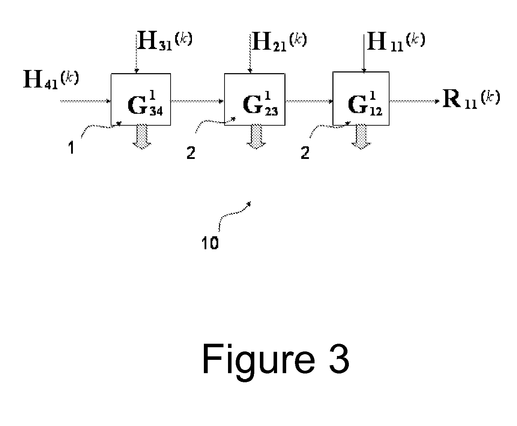

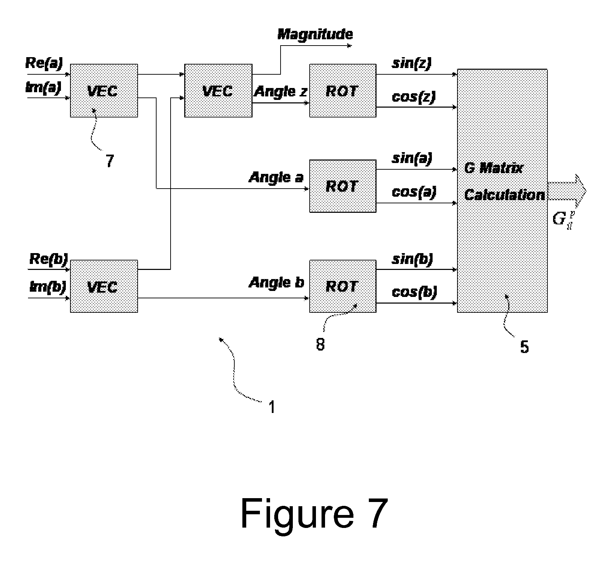

> ➢ **figures 1 and 2** present an architecture for QR decomposition in accordance with the invention, whereby **figure 1** displays the architecture associated with the calculation of the triangular matrix **R**($k$) and **figure 2** displays the architecture associated with the calculation of unitary matrix **$Q^H$**($k$), The input to each systolic array branch is a column of the channel matrix **H**($k$)where $k$ is the sub-carrier index. Each column of **H**($k$) is shifted into each corresponding pipeline branch. The output of each branch **10, 20, 30, 40** is the corresponding column of **R**($k$). For example figure 1 and 3 show that the input to pipeline branch 10 is the 1$^{st}$ column of matrix **H**($k$) i.e. elements **H**$_{41}$($k$),**H**$_{31}$($k$), **H**$_{21}$($k$),**H**$_{11}$($k$) and the output is the 1$^{st}$ column of matrix **R**($k$)i.e. element **R**$_{11}$($k$) and elements **R**$_{21}$($k$),**R**$_{31}$($k$),**R**$_{41}$($k$)f or which **R**$_{21}$($k$) = **R**$_{31}$($k$) = **R**$_{41}$($k$) = 0. Due to the zeros in the columns of the **R**($k$) matrix, simplifications arise in some of the triangular structures. The perpendicular outputs shown as block arrows are the values $g_{11}$($k$)$g_{12}$($k$)$g_{21}$($k$)$g_{22}$($k$) calculated to form the corresponding $\mathbf{G}_{il}^{p}\left(k\right)$ matrix in eq. (3) for the $k$th sub-carrier. These are subsequently passed down to the next pipeline branch and hence do not need to be re-computed. These values, displayed as block arrows in figure 1 and figure 2, are also forwarded to the corresponding pipeline branch of the PPSA dedicated to calculating **Q**$^H$($k$). Each processing block shown in **figures 3 to 6** corresponds to a processor array element block (PAEB) namely **1, 2, 3, 4 as depicted in figures 7 to 10.** Each sub-block shown in **figures 7 to 10** corresponds to one processor array element (PAE) of the hardware device used. The elements **7** denoted as *VEC* are operating in CORDIC Vectoring mode. This suggests that the VEC PAE takes as input a complex number and outputs the phase and magnitude of this number. The processor elements **8** denoted as ROT are operating in CORDIC rotational mode. This means that the ROT PAE takes as input an angle and outputs the sine and cosine of this angle. It can be seen that a dedicated PAE is used for each CORDIC module operating in either *Vectoring* or *Rotational* mode, hence there is no switching between the two functionalities. For higher throughput the CORDIC modules may be replaced by look-up tables thus reducing the number of clock cycles in each PAE significantly. In fact, the magnitude, angle, sine and cosine can be calculated using any chosen algorithm. PAEB **1** displayed in **figure 7** has as its input two complex numbers. For example in **figure 3,** these are the corresponding channel matrix elements shown and in direct correspondence α is the vertical complex input **H**$_{31}$($k$) and β is the horizontal complex input **H**$_{41}$($k$). It subsequently computes the three angles needed for the Three Angle Complex Rotation (TACR) technique in eq. (2). The TACR technique is described in WO 2007/037716A1.

$$\vartheta_{il}^{\alpha_p}\left(k\right)=\arg(\alpha),\vartheta_{il}^{\beta_p}\left(k\right)=\arg(\beta),\vartheta_{il}^{Z_p}\left(k\right)=\tan^{-1}\left(\frac{|\beta|}{|\alpha|}\right) \qquad (7)$$

and delivers the magnitude $\sqrt{|\alpha|^2 + |\beta|^2}$ as a horizontal output. These angles are subsequently forwarded to the ROT units which calculate the sines and cosines needed to compute eq. (3). The *Calculate G Matrix* PAE **5** performs the multiplications in eq. (3) which are reduced to the following:

$$\operatorname{Re}\!\left(\mathbf{G}_{il}^{p}(k)\right) = \begin{bmatrix} \cos\!\left(\vartheta_{il}^{Z_p}(k)\right)\cdot\cos\!\left(\vartheta_{il}^{\alpha_p}(k)\right) & \sin\!\left(\vartheta_{il}^{Z_p}(k)\right)\cdot\cos\!\left(\vartheta_{il}^{\beta_p}(k)\right) \\ \sin\!\left(\vartheta_{il}^{Z_p}(k)\right)\cdot\cos\!\left(\vartheta_{il}^{\alpha_p}(k)\right) & \cos\!\left(\vartheta_{il}^{Z_p}(k)\right)\cdot\cos\!\left(\vartheta_{il}^{\beta_p}(k)\right) \end{bmatrix} \tag{8}$$

and

$$\operatorname{Im}\!\left(\mathbf{G}_{il}^{p}(k)\right) = \begin{bmatrix} -\cos\!\left(\vartheta_{il}^{Z_p}(k)\right)\cdot\sin\!\left(\vartheta_{il}^{\alpha_p}(k)\right) & -\sin\!\left(\vartheta_{il}^{Z_p}(k)\right)\cdot\sin\!\left(\vartheta_{il}^{\beta_p}(k)\right) \\ \sin\!\left(\vartheta_{il}^{Z_p}(k)\right)\cdot\sin\!\left(\vartheta_{il}^{\alpha_p}(k)\right) & -\cos\!\left(\vartheta_{il}^{Z_p}(k)\right)\cdot\sin\!\left(\vartheta_{il}^{\beta_p}(k)\right) \end{bmatrix} \tag{9}$$

where *i,l and p* have the values shown in **figures 1 to 6.** From this the complex matrix is constructed:

$$\mathbf{G}_{il}^{p}(k) = \operatorname{Re}\!\left(\mathbf{G}_{il}^{p}(k)\right) + j\cdot\operatorname{Im}\!\left(\mathbf{G}_{il}^{p}(k)\right) = \begin{bmatrix} \cos\!\left(\vartheta_{il}^{Z_p}(k)\right)\cdot e^{j\vartheta_{il}^{\alpha_p}(k)} & \sin\!\left(\vartheta_{il}^{Z_p}(k)\right)\cdot e^{j\vartheta_{il}^{\beta_p}(k)} \\ -\sin\!\left(\vartheta_{il}^{Z_p}(k)\right)\cdot e^{j\vartheta_{il}^{\alpha_p}(k)} & \cos\!\left(\vartheta_{il}^{Z_p}(k)\right)\cdot e^{j\vartheta_{il}^{\beta_p}(k)} \end{bmatrix} \tag{10}$$

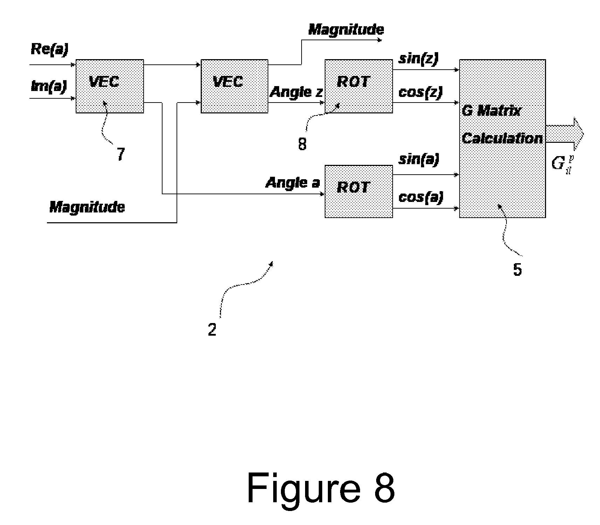

and is forwarded to each corresponding PAEB in the subsequent pipeline branch and to the associated branch within the PPSA dedictated to the computation of $\mathbf{Q}^{\mathrm{H}}(k)$. The PAEB displayed in **figure 8** has the same functionality as the previous with the exception that horizontal input $\beta$ is always a real magnitude value. This results in fewer PAE's since the angle of $\beta$ is always zero.

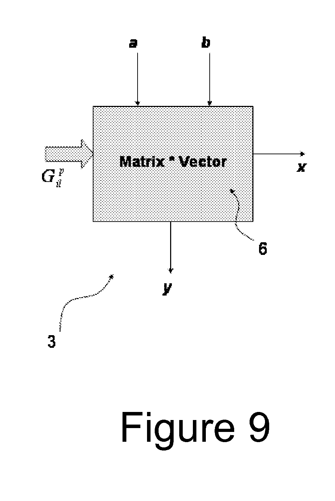

The *Matrix-Vector* 6 *PAE* in **figure 9** uses the pre-computed complex matrices $\mathbf{G}_{il}^{p}(k)$ and computes the matrix-vector product:

$$\begin{bmatrix} x(k) \\ y(k) \end{bmatrix} = \begin{bmatrix} \cos\!\left(\vartheta_{il}^{Z_p}(k)\right)\cdot e^{j\vartheta_{il}^{\alpha_p}(k)} & \sin\!\left(\vartheta_{il}^{Z_p}(k)\right)\cdot e^{j\vartheta_{il}^{\beta_p}(k)} \\ -\sin\!\left(\vartheta_{il}^{Z_p}(k)\right)\cdot e^{j\vartheta_{il}^{\alpha_p}(k)} & \cos\!\left(\vartheta_{il}^{Z_p}(k)\right)\cdot e^{j\vartheta_{il}^{\beta_p}(k)} \end{bmatrix}\cdot\begin{bmatrix} \alpha \\ \beta \end{bmatrix} \tag{11}$$

where, in direct correspondence to **figures 3 to 6,** $\alpha$ is the vertical complex input and $\beta$ is the horizontal complex input. This PAE takes full advantage of the Multiply-accumulate (MAC) unit and the pre-computed rotational values, hence CORDIC can be avoided thus shortening the pipeline latency since the matrix-vector product can be performed faster. It can be broken down into more array elements to accommodate for the complex number multiplications within the given data rate specification.

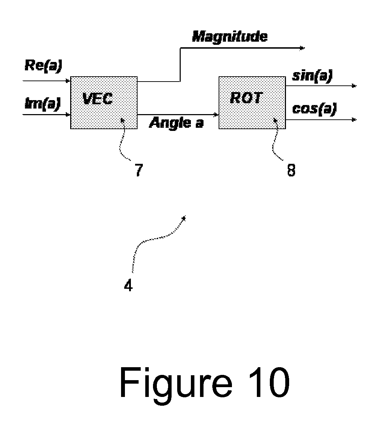

The final rotation is such that all elements on the main diagonal are real. It is performed by the VEC PAE **7** shown in **figure 10.** The magnitude output corresponds to $\mathbf{R}_{44}(k)$. The outputs of the ROT PAE are used in subsequent operations to perform the calculation of the matrix $\mathbf{Q}^{\mathrm{H}}(k)$, which is in fact the product of all the transform matrices. We can make use of the $\mathbf{G}_{il}^{p}(k)$ matrices that were previously calculated in each corresponding stage in $\mathbf{R}(k)$. The result is a PPSA similar to that used for calculating $\mathbf{R}(k)$ with the exception that we supply as inputs the known identity matrix $\mathbf{I}_{4\times4}$ and the known $\mathbf{G}_{il}^{p}(k)$ matrices.

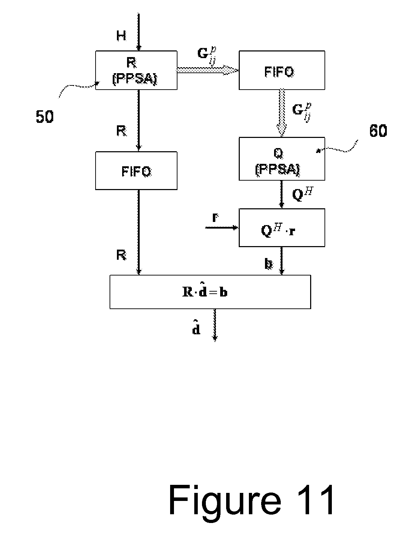

Hence, the design implements two parallel pipelined structures, one for the calculation of $\mathbf{R}(k)$ and one for the calculation of $\mathbf{Q}^{\mathrm{H}}(k)$. However, since the results of one are used in the other, software FIFO's are used to account for the branch latencies such that the inputs to each processing block are correctly time aligned. **Figure 11** shows the ZF detector and it can be seen how the $\mathbf{R}(k)$ and $\mathbf{Q}^{\mathrm{H}}(k)$ PPSA's, **50** and **60** respectively, are linked together such that the outputs delayed by the pipeline latencies are time-aligned. Finally, the back-substitution is performed and the transmitted data estimates are obtained.

In a preferred embodiment of the invention the method described above is implemented using a commercial off-the-shelf (COTS) HW/SW platform which essentially is a massively parallel array of fixed-point reduced instruction set computer (RISC) processors. Each processor has its own dedicated instruction and data memory and inter-communicates via a special switching fabric. It can essentially be viewed as a real-time hardware operating system. Each system task, as described above, is allocated to a processor. Task priority scheduling is achieved by specifying a bus priority slot rate for each processor element.

In a further embodiment of the invention all CORDIC modules are replaced with alternative algorithms and lookup tables that calculate the angle and magnitude of a complex number and the sine and cosine of an angle, so as to implement the 5MHz and 10MHz IEEE 802.16e/j scenarios.

The MIMO detection technique chosen is the *Zero-Forcing detector* (ZF) due to its simplicity, efficiency and, in comparison to other techniques, relatively low computational complexity. The standard mathematical model for spatial multiplexing is:

$$\mathbf{r}(k) = \mathbf{H}(k) \cdot \mathbf{d}(k) + \mathbf{n}(k) \qquad (12)$$

where, $\mathbf{r}$ is the received vector of size $M \times 1$, $d(k)$ is the transmit data vector of size $N \times 1$, $\mathbf{H}(k)$ is the $M \times N$ channel matrix, and $\mathbf{n}(k)$ is the $M \times 1$ noise vector. In multicarrier systems, one such equation holds for each subcarrier. The ZF sets the receiver equal to the inverse of the channel matrix. This is equal to left multiplying $\mathbf{r}(k)$ with the pseudo-inverse of $\mathbf{H}(k)$ for each subcarrier $k$:

$$\hat{\mathbf{d}}(k) = \left(\mathbf{H}^H(k) \cdot \mathbf{H}(k)\right)^{-1} \cdot \mathbf{H}^H(k) \cdot \mathbf{r}(k) = \mathbf{d}(k) + \left(\mathbf{H}^H(k) \cdot \mathbf{H}(k)\right)^{-1} \cdot \mathbf{H}^H(k) \cdot \mathbf{n}(k) \qquad (13)$$

It can be seen that since the eigenvalues of $\mathbf{H}(k)$ are inverted, in spatial subchannels with notches ZF detection can amplify the noise $\mathbf{n}(k)$. Hence, ZF is not the optimal MIMO detection technique however QRD can be used in more complex architectures such as the MMSE or the Sphere decoder. The QRD algorithm for the $M \times N$ channel matrix $\mathbf{H}(k)$ determines two matrices, $\mathbf{Q}^H(k)$ which is orthogonal and $\mathbf{R}(k)$ which is upper triangular such that $\mathbf{H}(k) = \mathbf{Q}^H(k) \cdot \mathbf{R}(k)$. The pseudo-inverse can be subsequently found as:

$$\left(\mathbf{H}^H(k) \cdot \mathbf{H}(k)\right)^{-1} \cdot \mathbf{H}^H(k) = \left(\mathbf{Q}(k) \cdot \mathbf{R}(k)\right)^{-1} = \mathbf{R}^{-1}(k) \cdot \mathbf{Q}^{-1}(k) = \mathbf{R}^{-1}(k) \cdot \mathbf{Q}^H(k) \qquad (14)$$

the detector output is the solution to a triangular system of equations given by:

$$\mathbf{R}(k) \cdot \hat{\mathbf{d}}(k) = \mathbf{Q}^H(k) \cdot \mathbf{r}(k) \qquad (15)$$

the solution is achieved by the back-substitution technique which is also incorporated within the parallel pipelined architecture.

The embodiments of the inventions present a novel parallel pipelined systolic array architecture for performing QRD. The proposed structure is significantly more efficient in terms of execution speed than the conventional triangular systolic array structure for QRD found in current literature. It is suitable for implementation on a multi-processor array but can also be equally exploited for a VLSI implementation. Applying this technique (using CORDIC modules) to 4x4 MIMO ZF detection for the 5MHz scenario a high throughput can be achieved by processing the next subcarrier channel matrix at a rate of 375ns ($\sim$ 60 cycles of a 160MHz clock) given a certain pipeline latency.

## Claims

1.   An apparatus for QR decomposition of one or a plurality of consecutive matrices **H,** each of them with at least four columns with a plurality of elements, to a corresponding number of consecutive upper triangular matrices **R** and consecutive unitary matrices **Q**$^H$, **characterized in that** the apparatus comprises a first set of at least four pipeline branches **(50)** for the calculation of matrices **R** and a second set of at least four pipeline branches **(60)** for the calculation of matrices **Q**$^H$, with each one of the at least four pipeline branches for the calculation of matrices **R** having a plurality of processor array element blocks **(1, 2, 3),** with each one of the said processor array element blocks **(1, 2, 3)** including input means configured to receive the elements of the matrix **H,** so that each one of the at least four pipeline branches of the first set implements a systolic array structure to process in parallel the at least four columns of each matrix **H,** and with each one of the said systolic array structures being different from the others of the said systolic array structures.

2. An apparatus for QR decomposition **according to claim 1,** whereby at least one of the pipeline branches **(10, 20, 30, 40)** of the first set **(50)** has a non-triangular structure **(10, 20).**

3. An apparatus for QR decomposition **according to claim 1** configured to calculate Givens rotation matrices, whereby each one of the pipeline branches **(10, 20, 30, 40)** of the first set **(50)** includes a plurality of processor array element blocks **(1, 2, 3, 4)** configured either to calculate the Givens rotations or to receive the Givens rotations that have been calculated in another of the pipeline branches **(10, 20, 30, 40)** of the first set **(50).**

4. An apparatus for QR decomposition **according to claim 1,** whereby at least one of the pipeline branches **(10, 20, 30, 40)** of the first set **(50)** has a linear structure **(10).**

5. An apparatus for QR decomposition **according to claim 3,** whereby at least one processor array element block **(1, 2, 3, 4)** includes a vectoring processor array element **(7)** and a rotational processor array element **(8),** the vectoring processor array element **(7)** being configured to take as input a complex number and to provide as output the phase and magnitude of this number and the rotational processor array element **(8)** being configured to take as input an angle and to provide as output the sine and cosine of this angle, and whereby the rotational processor array element **(8)** and the vectoring processor array element **(7)** are linked so that the rotational processor array element **(8)** receives as input the output of the vectoring processor array element **(7).**

6. An apparatus for QR decomposition **according to claim 1,** comprising a first set **(50)** of four pipeline branches **(10, 20, 30, 40)** to process a $4 \times 4$ matrix **H.**

7. An apparatus for QR decomposition **according to claim 3,** whereby the second set of pipeline branches **(60)** is configured to receive as input the Givens rotations that have been calculated in the first set of pipeline branches **(50)** and to provide as output the corresponding plurality of consecutive unitary matrices $\mathbf{Q}^H$.

8. A receiving apparatus for Multiple Input Multiple Output transmission including an apparatus **according to any of the claims 1 to 7.**

9. A method for QR decomposition of a matrix **H** with at least four columns to an upper triangular **R** matrix and a unitary $\mathbf{Q}^H$ matrix, **characterized in that** the method uses a first set of at least four systolic pipeline branches **(50)** for the calculation of matrices **R** and a second set of at least four systolic pipeline branches **(60)** for the calculation of matrices $\mathbf{Q^H}$, with each one of the at least four systolic pipeline branches of the first set **(50)** being dedicated to process in parallel a column of the matrix **H,** so that each one of the at least four columns of the **H** matrix is processed in parallel by one of the at least four systolic pipeline branches, **in that** the at least four columns of the **H** matrix are processed in parallel by the at least four systolic pipeline branches of the first set **(50),** and **in that** each one of the at least four systolic pipeline branches of the first set **(50)** has a different structure from the others of the at least four systolic pipeline branches of the first set **(50).**

10. A method for QR decomposition **according to claim 9,** whereby at least one of the systolic pipeline branches of the first set **(50)** is not triangular.

11. A method for QR decomposition **according to claim 9,** whereby the matrix **H** has exactly n columns and the method employs a first set with exactly n systolic pipeline branches and whereby the output of the systolic pipeline branch, which processes the n-th column of matrix **H,** is the n-th column of the triangular matrix **R,** for n being an integer greater than or equal to four.

12. A method for QR decomposition **according to claim 11,** whereby n is equal to four.

13. A method for QR decomposition **according to claim 9** employing a $2 \times 2$ **G** matrix, which **G** matrix when it is multiplied with another $2 \times 2$ matrix results in a matrix with zero value in its element occupying the second row of its first column, whereby the output of at least one of the systolic pipeline branches of the first set includes elements of the said **G** matrix, which are calculated by the said at least one of the systolic pipeline branches of the first set, and which are forwarded to another of the four systolic pipeline branches of the first set.

14. A method for QR decomposition **according to claim 12,** employing a 2×2 **G** matrix, which **G** matrix when it is multiplied with another 2×2 matrix results in a matrix with zero value in its element occupying the second row of its first column, whereby the output of the systolic pipeline branches of the first set that process the first, second and third columns of matrix **H,** include elements of the said **G** matrix, which are forwarded to the systolic pipeline branches of the first set that process the second, third and fourth columns of matrix **H** respectively.

15. A method for QR decomposition of the channel matrix of a Multiple Input Multiple Output antenna system, whereby the channel matrix is decomposed by a method **according to any of the claims 9 to 14.**

**Patentansprüche**

1. Vorrichtung zur QR-Zerlegung von einer oder mehreren aufeinanderfolgenden Matrizen **H,** wobei jede von ihnen mindestens vier Spalten mit mehreren Elementen hat, zu einer entsprechenden Anzahl von aufeinanderfolgenden, höheren, dreieckigen Matrizen **R** und aufeinanderfolgenden unitären Matrizen **Q**$^H$, **dadurch gekennzeichnet, dass** die Vorrichtung einen ersten Satz von mindestens vier Pipeline-Verzweigungen **(50)** für die Berechnung der Matrizen R, und einen zweiten Satz von mindestens vier Pipeline-Verzweigungen **(60)** für die Berechnung der Matrizen **Q**$^H$ aufweist, wobei jede der zumindest vier Pipeline-Verzweigungen für die Berechnung der Matrizen **R** mehrere Prozessorfeldelementblöcke **(1, 2, 3)** hat, wobei jeder der Prozessorfeldelementblöcke **(1, 2, 3)** Eingabemittel einschließt, die eingerichtet sind, die Elemente der Matrix **H** zu empfangen, so dass jede der mindestens vier Pipeline-Verzweigungen des ersten Satzes eine systolische Feldstruktur umsetzt, um parallel mindestens vier Spalten von jeder Matrix **H** zu verarbeiten, und wobei sich jede der systolischen Feldstrukturen von den anderen der systolischen Feldstrukturen unterscheidet.

2. Vorrichtung zur QR-Zerlegung nach Anspruch 1, wobei mindestens eine der Pipeline-Verzweigungen **(10, 20, 30, 40)** des ersten Satzes **(50)** eine nicht dreieckige Struktur **(10, 20)** hat.

3. Vorrichtung zur QR-Zerlegung nach Anspruch 1, die eingerichtet ist, Givens-Rotationsmatrizen zu berechnen, wobei jede der Pipeline-Verzweigungen **(10, 20, 30, 40)** des ersten Satzes **(50)** mehrere Prozessorfeldelementblöcke **(1, 2, 3, 4)** einschließt, die eingerichtet sind, entweder die Givens-Roatationen zu berechnen, oder die Givens-Rotationen zu empfangen, die in einer anderen der Pipeline-Verzweigungen **(10, 20, 30, 40)** des ersten Satzes **(50)** berechnet wurden.

4. Vorrichtung zur QR-Zerlegung nach Anspruch 1, wobei mindestens eine der Pipeline-Verzweigungen **(10, 20, 30, 40)** des ersten Satzes **(50)** eine lineare Struktur **(10)** hat.

5. Vorrichtung zur QR-Zerlegung nach Anspruch 3, wobei mindestens ein Prozessorfeldelementblock **(1, 2, 3, 4)** ein Vectoring-Prozessorfeldelement **(7)** und ein Drehprozessorfeldelement **(8)** einschließt, wobei das Vectoring-Prozessorfeldelement **(7)** eingerichtet ist, als Eingabe eine komplexe Zahl zu nehmen und als Ausgabe die Phase und die Größe dieser Zahl bereitzustellen, und wobei das Rotationsprozessorfeldelement **(8)** eingerichtet ist, als Eingabe einen Winkel zu nehmen, und als Ausgabe den Sinus und Kosinus dieses Winkels bereitzustellen, und wobei das Rotationsprozessorfeldelement **(8)** und das Vectoring-Prozessorfeldelement **(7)** verbunden sind, so dass das Drehprozessorfeldelement **(8)** als Eingabe die Ausgabe des Vectoring-Prozessorfeldelements **(7)** empfängt.

6. Vorrichtung zur QR-Zerlegung nach Anspruch 1, das einen ersten Satz **(50)** von vier Pipeline-Verzweigungen **(10, 20, 30, 40)** umfasst, um eine 4x4-Matrix **H** zu verarbeiten.

7. Vorrichtung zur QR-Zerlegung nach Anspruch 3, wobei der zweite Satz von vier Pipeline-Verzweigungen **(60)** eingerichtet ist, als Eingabe die Givens-Rotationen zu empfangen, die in dem ersten Satz von Pipeline-Verzweigungen **(50)** berechnet wurden, und als Ausgabe die entsprechende Anzahl von aufeinanderfolgenden unitären Matrizen **Q**$^H$ bereitzustellen.

8. Empfangsvorrichtung zur Multiple Input Multiple Output Übertragung mit einer Vorrichtung nach einem der Ansprüche 1 bis 7.

9. Verfahren zur QR-Zerlegung einer Matrix **H** mit mindestens vier Spalten zu einer höheren, dreieckigen Matrix **R** und einer unitären Matrix **Q**$^H$, **dadurch gekennzeichnet, dass** das Verfahren einen ersten Satz von mindestens vier systolischen Pipeline-Verzweigungen **(50)** für die Berechnung der Matrizen R und einen zweiten Satz von mindestens vier systolischen Pipeline-Verzweigungen **(60)** für die Berechnung der Matrizen $\mathbf{Q}^H$ verwendet, wobei jede der mindestens vier systolischen Pipeline-Verzweigungen des ersten Satzes **(50)** dafür reserviert ist, parallel eine Spalte der Matrix **H** zu verarbeiten, so dass jede der mindestens vier Spalten der Matrix **H** von einem der mindestens vier systolischen Pipeline-Verzweigungen parallel verarbeitet wird, dass die mindestens vier Spalten der Matrix **H** von den mindestens vier systolischen Pipeline-Verzweigungen des ersten Satzes **(50)** parallel verarbeitet werden, und dass jede der mindestens vier systolischen Pipeline-Verzweigungen des ersten Satzes **(50)** eine andere Struktur als die anderen der mindestens vier systolischen Pipeline-Verzweigungen des ersten Satzes **(50)** hat.

**10.** Verfahren zur QR-Zerlegung nach Anspruch 9, wobei mindestens eine der systolischen Pipeline-Verzweigungen des ersten Satzes **(50)** nicht dreieckig ist.

**11.** Verfahren zur QR-Zerlegung nach Anspruch 9, wobei die Matrix **H** genau n Spalten hat, und das Verfahren einen ersten Satz mit genau n systolischen Pipeline-Verzweigungen verwendet, und wobei die Ausgabe der systolischen Pipeline-Verzweigung, welche die n-te Spalte der Matrix **H** verarbeitet, die n-te Spalte der dreieckigen Matrix **R** ist, wobei n eine ganze Zahl ist, die größer oder gleich vier ist.

**12.** Verfahren zur QR-Zerlegung nach Anspruch 11, wobei n gleich vier ist.

**13.** Verfahren zur QR-Zerlegung nach Anspruch 9, das eine 2x2-Matrix **G** verwendet, wobei die die Matrix **G,** wenn sie mit einer anderen 2x2-Matrix multipliziert wird, eine Matrix mit Nullwert in seinem Element ergibt, welches die zweite Zeile der ersten Spalte besetzt, wobei die Ausgabe von mindestens einer der systolischen Pipeline-Verzweigungen des ersten Satzes Elemente der Matrix **G** einschließt, die durch die mindestens eine der systolischen Pipeline-Verzweigungen des ersten Satzes berechnet werden und die zu einer anderen der vier systolischen Pipeline-Verzweigungen des ersten Satzes weitergeleitet werden.

**14.** Verfahren zur QR-Zerlegung nach Anspruch 12, welches eine 2x2-Matrix **G** verwendet, wobei die Matrix **G,** wenn sie mit einer anderen 2x2-Matrix multipliziert wird, eine Matrix mit Nullwert in seinem Element ergibt, das die zweite Zeile seiner ersten Spalte besetzt, wobei die Ausgabe der systolischen Pipeline-Verzweigungen des ersten Satzes, welche die erste, zweite und Dritte Spalte der Matrix **H** verarbeiten, Elemente der Matrix **G** einschließt, die zu den systolischen Pipeline-Verzweigungen des ersten Satzes weitergeleitet werden, welche die zweite, dritte bzw. vierte Spalte der Matrix **H** verarbeiten.

**15.** Verfahren zur QR-Zerlegung der Kanalmatrix eines Multiple Input Multiple Output Antennensystems, wobei die Kanalmatrix durch ein Verfahren nach einem der Ansprüche 9 bis 14 zerlegt wird.

**Revendications**

**1.** Appareil pour décomposition QR d'une ou d'une pluralité de matrices consécutives H, dont chacune comprend au moins quatre colonnes avec une pluralité d'éléments, en un nombre correspondant de matrices triangulaires supérieures consécutives R et de matrices unitaires consécutives $Q^H$, **caractérisé en ce que** l'appareil comprend un premier ensemble d'au moins quatre branches de pipeline (50) pour le calcul de matrices R et un second ensemble d'au moins quatre branches de pipeline (60) pour le calcul de matrices $Q^H$, chacune des au moins quatre branches de pipeline pour le calcul de matrices R ayant une pluralité de blocs d'éléments de réseau de processeurs (1, 2, 3), chacun desdits blocs d'éléments de réseau de processeurs (1, 2, 3) comprenant des moyens d'entrée configurés pour recevoir les éléments de la matrice H de sorte que chacune des au moins quatre branches de pipeline du premier ensemble présente une structure de réseau systolique pour traiter en parallèle les au moins quatre colonnes de chaque matrice H et chacune desdites structures de réseau systoliques étant différente des autres desdites structures de réseau systoliques.

**2.** Appareil pour décomposition QR selon la revendication 1, dans lequel au moins l'une des branches de pipeline (10, 20, 30, 40) du premier ensemble (50) a une structure non triangulaire (10, 20).

**3.** Appareil pour décomposition QR selon la revendication 1 configuré pour calculer des matrices de rotation de Givens, dans lequel chacune des branches de pipeline (10, 20, 30, 40) du premier ensemble (50) comprend une pluralité de blocs d'éléments de réseau de processeurs (1, 2, 3, 4) configurés pour calculer les rotations de Givens ou recevoir les rotations de Givens qui ont été calculées dans une autre des branches de pipeline (10, 20, 30, 40) du premier ensemble (50).

**4.** Appareil pour décomposition QR selon la revendication 1, dans lequel au moins l'une des branches de pipeline (10, 20, 30, 40) du premier ensemble (50) a une structure linéaire (10).

**5.** Appareil pour décomposition QR selon la revendication 3, dans lequel au moins un bloc d'élément de réseau de processeurs (1, 2, 3, 4) comprend un élément de réseau de processeurs de vectorisation (7) et un élément de réseau de processeurs de rotation (8), l'élément de réseau de processeurs de vectorisation (7) étant configuré pour prendre comme entrée un nombre complexe et pour fournir comme sortie la phase et la grandeur de ce nombre et l'élément de réseau de processeurs de rotation (8) étant configuré pour prendre comme entrée un angle et pour fournir comme sortie le sinus et le cosinus de cet angle, et dans lequel l'élément de réseau de processeurs de rotation (8) et l'élément de réseau de processeurs de vectorisation (7) sont liés de sorte que l'élément de réseau de processeurs de rotation (8) reçoive comme entrée la sortie de l'élément de réseau de processeurs de vectorisation (7).

**6.** Appareil pour décomposition QR selon la revendication 1, comprenant un premier ensemble (50) de quatre branches de pipeline (10, 20, 30, 40) pour traiter une matrice 4 x 4 H.

**7.** Appareil pour décomposition QR selon la revendication 3, dans lequel le second ensemble de branches de pipeline (60) est configuré pour recevoir comme entrée les rotations de Givens qui ont été calculées dans le premier ensemble de branches de pipeline (50) et pour fournir comme sortie la pluralité correspondante de matrices unitaires consécutives $Q^H$.

**8.** Appareil de réception pour une transmission à entrées multiples et à sorties multiples comprenant un appareil selon l'une quelconque des revendications 1 à 7.

**9.** Procédé pour décomposition QR d'une matrice H avec au moins quatre colonnes en une matrice triangulaire supérieure R et une matrice unitaire $Q^H$, **caractérisé en ce que** le procédé utilise un premier ensemble d'au moins quatre branches de pipeline systoliques (50) pour le calcul de matrices R et un second ensemble d'au moins quatre branches de pipeline systoliques (60) pour le calcul de matrices $Q^H$, chacune des au moins quatre branches de pipeline systoliques du premier ensemble (50) étant dédiée au traitement en parallèle d'une colonne de la matrice H, de sorte que chacune des au moins quatre colonnes de la matrice H soit traitée en parallèle par l'une des au moins quatre branches de pipeline systoliques, **en ce que** les au moins quatre colonnes de la matrice H sont traitées en parallèle par les au moins quatre branches de pipeline systoliques du premier ensemble (50) et **en ce que** chacune des au moins quatre branches de pipeline systoliques du premier ensemble (50) a une structure différente des autres des au moins quatre branches de pipeline systoliques du premier ensemble (50).

**10.** Procédé pour décomposition QR selon la revendication 9, dans lequel au moins l'une des branches de pipeline systoliques du premier ensemble (50) n'est pas triangulaire.

**11.** Procédé pour décomposition QR selon la revendication 9, dans lequel la matrice H a exactement n colonnes et le procédé utilise un premier ensemble avec exactement n branches de pipeline systoliques et dans lequel la sortie de la branche de pipeline systolique qui traite le $n^{ème}$ colonne de la matrice H est la $n^{ème}$ colonne de la matrice triangulaire R, n étant un entier supérieur ou égal à quatre.

**12.** Procédé pour décomposition QR selon la revendication 1, dans lequel n est égal à quatre.

**13.** Procédé pour décomposition QR selon la revendication 9 employant une matrice 2 x 2 G, laquelle matrice G, lorsqu'elle est multipliée par une autre matrice 2 x 2, donne une matrice avec une valeur nulle dans son élément occupant la deuxième rangée de sa première colonne, dans lequel la sortie d'au moins l'une des branches de pipeline systoliques du premier ensemble comprend des éléments de ladite matrice G qui sont calculés par la au moins une des branches de pipeline systoliques du premier ensemble et qui sont acheminés à une autre des quatre branches de pipeline systoliques du premier ensemble.

**14.** Procédé pour décomposition QR selon la revendication 12, employant une matrice 2 x 2 G, laquelle matrice G, lorsqu'elle est multipliée par une autre matrice 2 x 2, donne une matrice avec une valeur nulle dans son élément occupant la deuxième rangée de sa première colonne, dans lequel la sortie des branches de pipeline systoliques du premier ensemble qui traitent les première, deuxième et troisième colonnes de la matrice H, comprend des éléments de ladite matrice G qui sont acheminés aux branches de pipeline systoliques du premier ensemble qui traitent les deuxième, troisième et quatrième colonnes de la matrice H, respectivement.

15. Procédé pour décomposition QR de la matrice de canal d'un système d'antenne à entrées multiples et à sorties multiples, dans lequel la matrice de canal est décomposée par un procédé selon l'une quelconque des revendications 9 à 14.

10

$H_{41}(k)$ $H_{31}(k)$ $H_{21}(k)$ $H_{11}(k)$   $H_{42}(k)$ $H_{32}(k)$ $H_{22}(k)$ $H_{12}(k)$   $H_{43}(k)$ $H_{33}(k)$ $H_{23}(k)$ $H_{13}(k)$   $H_{44}(k)$ $H_{34}(k)$ $H_{24}(k)$ $H_{14}(k)$

$G_{34}^1$ $G_{23}^1$ $G_{12}^1$

**Delay 1**     **Delay 1**     **Delay 1**

**Systolic Array 1**

$R_{11}(k)$   0   0   0

$G_{34}^1$ $G_{23}^1$ $G_{12}^1$

**Systolic Array 2**    $G_{34}^2$ $G_{23}^2$

**Delay 2**     **Delay 2**

20

$R_{12}(k)$ $R_{22}(k)$   0   0

$G_{34}^1$ $G_{23}^1$ $G_{12}^1$   **Systolic Array 3**

$G_{34}^2$ $G_{23}^2$

$G_{34}^3$

**Delay 3**

30

$R_{13}(k)$ $R_{23}(k)$ $R_{33}(k)$   0

$G_{34}^1$ $G_{23}^1$ $G_{12}^1$

$G_{34}^2$ $G_{23}^2$

$G_{34}^3$   **Systolic Array 4**

50       40

$R_{14}(k)$ $R_{24}(k)$ $R_{34}(k)$ $R_{44}(k)$

# Figure 1

Figure 2

$$\mathbf{H_{31}}^{(k)} \qquad \mathbf{H_{21}}^{(k)} \qquad \mathbf{H_{11}}^{(k)}$$

$$\mathbf{H_{41}}^{(k)}$$

$$\mathbf{G_{34}^1} \qquad \mathbf{G_{23}^1} \qquad \mathbf{G_{12}^1} \qquad \mathbf{R_{11}}^{(k)}$$

1      2      2

10

# Figure 3

Figure 4

Figure 5

Figure 6

# Figure 7

Figure 8

Figure 9

Figure 10

Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007037716 A
- EP 1772809 A
- US 2009116588 A
- US 6675187 A2
- WO 2007037716 A1